# EUROPEAN PATENT APPLICATION

(11) **EP 1 128 193 A1**
(43) Date of publication of application: **29.08.2001**
(21) Application number: 00902038.9
(22) Date of filing: 01.02.2000
(51) Int. Cl.: G02B 6/12, G02B 6/293

(54) **ARRAY WAVEGUIDE DIFFRACTION GRATING**

(30) Priority: 30.07.1999 JP 21674199
(71) Applicant: The Furukawa Electric Co., Ltd., Tokyo 100-8322 (JP)
(72) Inventor: NARA, Kazutaka, The Furukawa Electric Co., Ltd, Tokyo 100-8322 (JP); NAKAJIMA, Takeshi, The Furukawa Electric Co., Ltd, Tokyo 100-8322 (JP); KASHIHARA, Kazuhisa, The Furukawa Electric Co. Ltd, Tokyo 100-8322 (JP)
(74) Representative: Dealtry, Brian
(86) International application number: JP0000539
(87) International publication number: WO0109652

(57) **Abstract**

The invention relates to an arrayed waveguide grating which forms a flattened area whose flatness is satisfactory, in the vicinity of the center wavelength of transmission spectra, wherein linear waveguides (1) which have a width equivalent to or less than 0.65 times the width of respective optical input waveguides (12) are connected to respective emitting sides of a plurality of optical input waveguides (12), tapered waveguides (8) which widen the mode field of signal light toward the emitting side are connected to the respective emitting sides of the linear waveguides (1), and first slab waveguides (13), a plurality of juxtaposed arrayed waveguides (14) having different lengths from each other, second slab waveguides (15) and a plurality of juxtaposed optical output waveguides (16) are connected to the emitting sides of the tapered waveguides (8) in this order. The center of power of light signals propagated through the optical input waveguides (12) is caused to shift to the center of the tapered waveguides in the width direction by the linear waveguides (1), and the center of the corresponding light signal power is made incident on the center of the incident sides of the tapered waveguides (8) in the width direction, whereby distortion of the mode field of lights emitting from the tapered waveguides (8) can be suppressed, and it is possible to form a flattened area whose flatness is satisfactory, in the vicinity of the center wavelength of transmission spectra.

## Description

### Technical field of the invention

The present invention relates to an arrayed waveguide grating in the field of optical transmissions.

### Background of the invention

Recently, in optical transmissions, studies and researches have been actively carried out in optical wavelength division multiplexing systems as a method for greatly increasing transmission capacity. The wavelength division multiplexing systems has been progressively achieved. An optical wavelength division multiplexing systems is to multiplex and transmit a plurality of lights having, for example, different wavelengths from each other. In such an optical wavelength division multiplexing systems, lights can be picked up wavelength by wavelength from a plurality of lights transmitted, at the light receiving side. Therefore, optical transmission elements, etc., which allow to transmit only predetermined wavelengths are provided in such an optical wavelength division multiplexing system.

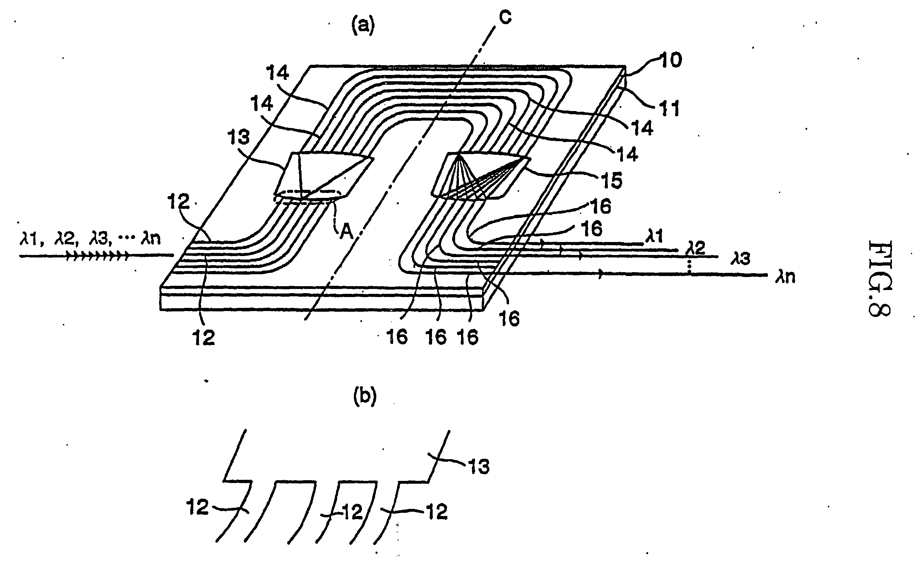

As one example of optical transmission elements, there is the arrayed waveguide grating (AWG: Arrayed waveguide Grating) shown in, for example, FIG. 8. The arrayed waveguide grating is such that a waveguide forming portion 10 having a waveguide construction as shown in the same drawing is secured on a substrate 11. The construction of the waveguide is as described below.

That is, a first slab waveguide 13 is connected to the emitting side of one or more juxtaposed optical input waveguides 12, and a plurality of juxtaposed arrayed waveguides 14 are connected to the emitting side of the first slab waveguide 13 while a second slab waveguide 15 is connected to the emitting side of a plurality of arrayed waveguides 14. Also, a plurality of juxtaposed optical output waveguides 16 are connected to the emitting side of the second slab waveguide 15. The corresponding arrayed waveguides 14 propagate lights emitting from the first slab waveguide 13 and are constructed so that the respective arrayed waveguides 14 are produced to different lengths from each other.

Also, the number of optical input waveguides 12 and optical output waveguides 16 is determined in accordance with the number of signal lights of different wavelengths from each other, which are divided by, for example, an arrayed waveguide grating. Usually, in addition, a great number (for example, 100) of the arrayed waveguides 14 are provided. However, in the same drawing, for the purpose of simplification of the drawing, the numbers of these respective waveguides 12, 14 and 16 are illustrated in simplification. A construction forming an arrayed waveguide grating is generally formed symmetrically around the broken line C in the drawing.

FIG. 8(b) is a general view of an enlarged view of FIG. 8(a) showing a block encircled by the chain line A. As illustrated in FIG. 8(b), in a prior art arrayed waveguide grating, the emitting side of the curved optical input waveguide 12 is directly connected to the incident side of the first slab waveguide 13. Also, the incident side of a curved optical output waveguide 16 is directly connected to the emitting side of the second slab waveguide 16 (not illustrated in the same drawing) as in the above.

For example, a transmission side optical fiber is connected to the optical input waveguide 12 so that wavelength multiplexed lights are introduced therein. Lights introduced into the first slab waveguide 13, passing through the optical input waveguide 12, are spread by a diffraction effect, and are made incident on a plurality of respective arrayed waveguides 14, and they propagate through the respective arrayed waveguides 14.

The lights which propagated through the respective arrayed waveguides 14 reach the second slab waveguides 15. Further, the lights are forcoused in the optical output waveguides 16 and outputted therefrom. In addition, since the lengths of the respective arrayed waveguides 14 are different from each other, the individual lights are subjected to phase shifts after having propagated through the respective arrayed waveguides 14. Accordingly, the plane of waves of the forcoused lights is inclined in response to the phase shifts. The position where condensing of lights occurs is determined on the basis of the inclination angle. Therefore, the light having different wavelengths may forcous in different positions, whereby lights of different wavelengths can be outputted from different optical output waveguides 16 per wavelength by forming optical output waveguides 16 at the positions.

For example, as shown in the same drawing, as wavelength multiplexed lights having wavelengths λ 1, λ 2, λ 3, .... λn (n: an integral number exceeding 4) are inputted from one optical input waveguide 12, the light is spread by the first slab waveguide 13. Then, the light reaches the arrayed waveguide 14, passes through the second slab waveguide 15, and is forcoused at different positions from each other, depending on the wavelengths. Accordingly, light of the respective wavelengths is made incident on different optical output waveguides 16, pass through the respective optical output waveguides 16, and are outputted from the emission end of the optical output waveguides 16. Therefore, by connecting optical fibers for outputting light to the emission ends of the respective optical output waveguides 16, divided light of respective wavelengths can be picked up by these optical fibers.

In the arrayed waveguide grating, wavelength resolution power of a grating is proportionate to the difference (ΔL) in length between the respective arrayed waveguides 14 which constitute the grating. Therefore, by designing the ΔL to a larger figure, the arrayed waveguide grating can optically synthesize and divide wavelength multiplexed light whose wavelength interval is narrow. This cannot be achieved by any prior art grating. Accordingly, the arrayed waveguide grating can achieve the optical synthesizing and dividing feature (a feature which can synthesize and divide a plurality of signal light whose wavelength interval is 1nm or less) of a plurality of signal light, which is required to achieve high bit rate optical wavelength multiplexed transmission.

Actually however, as described above, the arrayed waveguide grating is applied, for example, to a system for optical wavelength multiplexed transmissions, and is used for, for example, picking up light by wavelength at the optical receiving side from a plurality of transmitted light. Therefore, in the array waveguide grating, if the center wavelength of outputting optical signals shifts, it constitutes a critical problem.

However, in, for example, an arrayed waveguide grating using a quartz (SiO₂) based waveguide, the arrayed waveguides 14 have temperature dependency in a refractive index. Therefore, the center wavelength (the center wavelength of output light from respective optical output waveguides 16 of the arrayed waveguide grating) of transmitting spectra of the arrayed waveguide grating is destroyed by the peripheral environmental temperature. Accordingly, in order to prevent this, conventionally, a method for regulating the temperature of the arrayed wavelength grating by a Peltier element, or a method for heating it to a high temperature by using a heater have been employed as countermeasures. If such countermeasures are employed, a shift in the center wavelength of the transmitting spectra of the arrayed waveguide grating, which results from temperature dependency in a refractive index of the arrayed waveguide 14, can be suppressed.

But, a shift of the center wavelength of the transmission spectra is also generated by a curved structure of an optical waveguide 12, the core width (waveguide width) or core thickness (thickness of the waveguide) of an arrayed waveguide 14, and a difference in the refractive index in production. There may be no case where the shift of the center wavelength of the transmission spectra of an arrayed waveguide grating, which results from such a difference in production, can be suppressed by the abovementioned temperature control.

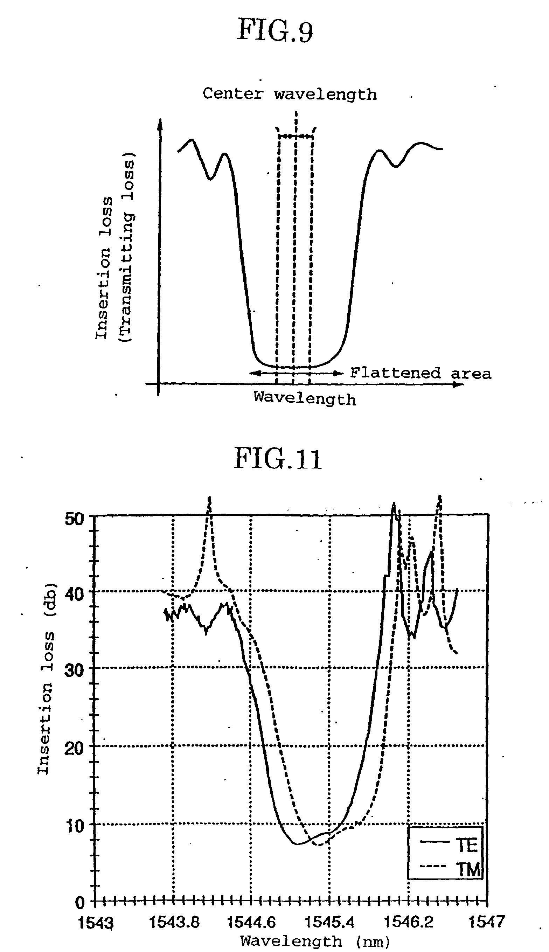

Therefore, an arrayed waveguide grating has been developed, which is constructed so that sufficient isolation can be secured even though the center wavelength of light transmission shifts slightly due to a difference in production of the core thickness and refractive index. The proposal is such that the transmission spectra of light passed through the arrayed waveguide grating become such spectra as shown in, for example, FIG. 9. That is, the proposal is that an arrayed waveguide grating is designed so as to form a flattened area at both the long and short wavelength sides of the center wavelength of light transmission. Thus, if the arrayed waveguide grating is designed so that a flattened area can be secured in the vicinity of the center wavelength of light transmission of the arrayed waveguide grating, sufficient isolation can be secured even though the center wavelength of light transmission shifts slightly. Therefore, the proposal can provide an arrayed waveguide grating that can function without any problem even though a bending structure arises in the optical input waveguide 12 of the arrayed waveguide grating and a difference in production of the parameters of the arrayed waveguide 14 occurs.

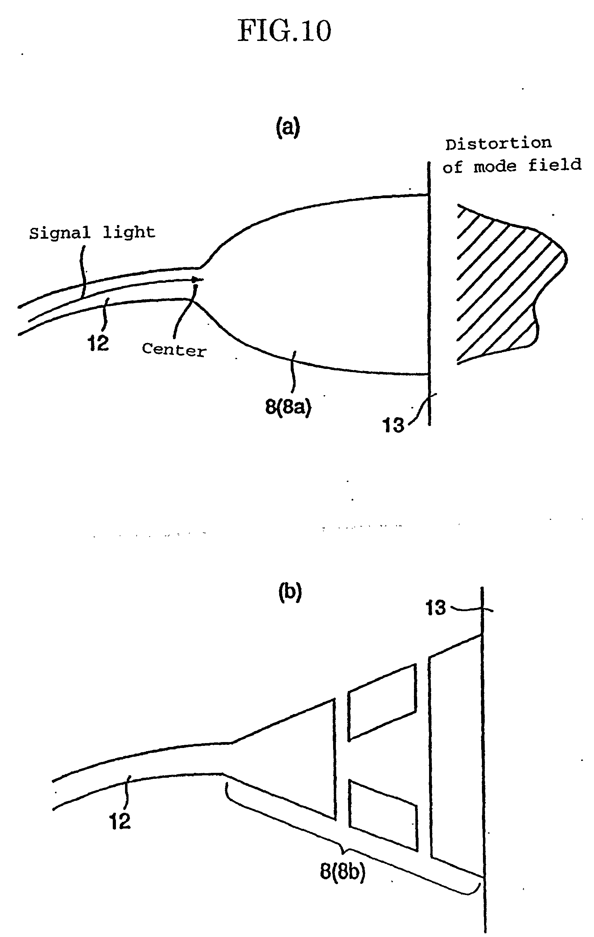

Such an arrayed waveguide grating is called a flat band pass type arrayed waveguide grating. It has such a structure as shown in, for example, FIG. 10(a) and FIG. 10(b). That is, the flat band pass type arrayed waveguide grating is constructed by providing it with tapered waveguides 8 (8a and 8b), whose waveguide width is widened toward the emitting side, at the emitting side of respective optical input waveguides 12.

The tapered waveguide 8a illustrated in FIG. 10(a) is a parabolic tapered waveguide, and the tapered waveguide 8b illustrated in FIG. 10(b) is a slit tapered wavequide (Japanese Laid-open Patent Publication No. 237449 of 1998). These tapered waveguides 8a and 8b function as mode field widening waveguides in which the mode field of signal lights is widened toward the emitting side. Also, since such tapered waveguides 8a and 8b forms a flattened area illustrated in FIG. 9 in the transmission spectra of an arrayed waveguide grating by its mode field widening feature, there are circumstances in which they are called a flattened core pattern.

Hereinafter, a detailed description is given of a flat band pass type arrayed waveguide grating. Generally, a transmission spectrum of an arrayed waveguide grating is produced by the overlapping integration of two types of mode fields as shown below, one of which is a mode field at the incident boundary plane of the first slab waveguide 13 when light emitting from optical input waveguide 12 are inputted into the first slab waveguide 13, and the other of which is a mode field at the incident boundary plane of optical output waveguide 16 when light emitting from the second slab waveguide 15 are inputted into the optical output waveguide 16.

Therefore, by widening at least one of the two types of mode field diameters without any distortion, a transmission spectrum of light having a flattened area as shown in FIG. 9 can be obtained. That is, one of methods for obtaining a transmission spectrum having the abovementioned flattened area is to make light emitting from the optical input waveguide 12 incident on the slab waveguide 13 by widening the mode field of the light without any distortion. Another method for obtaining a transmission spectrum having the abovementioned flattened area is to make light emitting from the second slab waveguide 15 incident on the optical output waveguide 16 by narrowing the mode field thereof without any distortion.

The above two methods can bring the same or equivalent effect through reciprocity of the arrayed waveguide grating. Therefore, if either one of the two is carried out, the transmission spectrum of the arrayed waveguide grating can be made into a transmission spectrum having a flattened area. As shown in FIG. 10(a) and FIG. 10(b), if tapered waveguides 8 (8a and 8b) are provided at the emitting side of the respective optical input waveguides 12, the mode field of signal light propagating through the optical input waveguides 12 can be widened toward the emitting side, whereby an arrayed waveguide grating having a construction illustrated in FIG. 10(a) and FIG. 10(b) can be made into a flat band pass type arrayed waveguide grating.

Herein, a method for widening the mode field pattern of signal lights by providing a mode field widening waveguide like the tapered waveguides 8 can be obtained by generating and propagating high level mode constituents in the mode field widening waveguide. Also, in the case where light is made incident on the center position of input of the mode field widening waveguide, uniform high level mode constituents are able to occur and propagate. Accordingly, where light is made incident on the center position of input of the mode field widening waveguide, a distortion-free mode field pattern is formed, whereby a flat mode pattern can be obtained at the long wavelength side and short wavelength side of the center wavelength of a light transmission spectrum.

On the other hand, where light is made incident on a position shifted from the center position of input of the mode field widening waveguide, non-uniform high level mode constituents occur and propagate, whereby a distorted mode field is brought about. Therefore, in this case, such a mode pattern will be obtained, in which the flatness of the flattened area formed at the long wavelength side and short wavelength side of the center wavelength of a light transmission spectrum has deteriorated.

However, as described above, since the optical input waveguide 12 has a curved structure, propagating light proceeds while being shifted from the center of the curved optical input waveguide 12. Therefore, the center of power of light propagating through the optical input waveguide 12 shifts from the center of the optical input waveguide 12, depending on the radius of curvature of the optical input waveguide 12. In addition, the center of light power may shifts from the center of the optical input waveguide 12 through differences in production with respect to the structural parameters (core thickness, core width and refractive index) of the optical input waveguide 12.

Accordingly, there is almost no case where the center of light power is made incident on the center of a mode field widening waveguide such as tapered waveguides 8. Thus, non-uniform high level mode constituents occur and propagate and, as shown in FIG. 10(b), the emission mode field of the tapered waveguides 8 is distorted to a large extent, and it becomes impossible to make the lights emitting from the optical input waveguide 12 incident on the slab waveguide 13 by widening the mode field thereof without any distortion by the tapered waveguides 8.

Therefore, as shown in FIG. 11, in a prior art flat band pass type arrayed waveguide grating, the flatness of the flattened area of a transmission spectrum is not complete, wherein there are many cases where the entire spectrum pattern is distorted. Accordingly, with the prior art flat band pass type arrayed waveguide grating, it was very difficult to obtain a transmission spectrum as described as shown in FIG. 9.

The present invention was developed to solve these shortcomings and problems. It is therefore an object of the invention to provide an arrayed waveguide grating capable of forming a flattened area, whose flatness is satisfactory, at the long wavelength side and short waveguide side of the center wavelength of a transmission spectrum. That is, the present invention provides, by forming a flattened area whose flatness is satisfactory, an arrayed waveguide grating having sufficient isolation, for which high yield production can be obtained, even though the center wavelength of light transmission shifts due to differences in production of optical input waveguides and arrayed waveguides, etc., which form an arrayed waveguide grating.

### Disclosure of the invention

In order to achieve the object, the present invention employs the following constructions to achieve the object. That is, an arrayed waveguide grating according to a first aspect of the invention has a waveguide construction in which a first slab waveguide is connected to the emitting side of one or more juxtaposed optical input waveguides, a plurality of juxtaposed arrayed waveguides of differing lengths, which propagate light introduced from the corresponding first slab waveguides are connected to the emitting side of the corresponding first slab waveguides, a second slab waveguide is connected to the emitting side of the corresponding plurality of arrayed waveguides, and a plurality of juxtaposed optical output waveguides are connected to the emitting side of the corresponding second slab waveguide, propagate a plurality of light signals having different wavelengths from each other, which are inputted from the corresponding optical input waveguides, so that a shift in phase are provided for respective wavelengths by the corresponding arrayed waveguide, makes the respective signal lights incident on different optical output waveguides by wavelength, and outputs lights of different wavelengths from different optical output waveguides; wherein linear waveguides whose width is narrower than the width of the corresponding optical input waveguides, are connected to the emitting side of the corresponding respective optical input waveguides, also, a mode field widening waveguide which widens a mode field of signal lights toward the emitting side of the respective linear waveguides is connected to the emitting side thereof, the emitting side of the corresponding respective mode field widening waveguides is connected to the incident side of the corresponding first slab waveguide, the centers of the corresponding respective linear waveguides in the width direction thereof are aligned with the centers of the incident end of the corresponding mode field widening waveguide corresponding thereto in the width direction, and Ws/Wb≤0.65 is established where Ws is a width of the corresponding respective linear waveguides, and Wb is a width of the corresponding respective optical input waveguides.

An arrayed waveguide grating according to a second aspect of the invention has a waveguide construction in which a first slab waveguide is connected to the emitting side of one or more juxtaposed optical input waveguides, a plurality of juxtaposed arrayed waveguides of different lengths, which propagate light introduced from the corresponding first slab waveguides is connected to the emitting side of the corresponding first slab waveguides, a second slab waveguide is connected to the emitting side of the corresponding plurality of arrayed waveguides, and a plurality of juxtaposed optical output waveguides are connected to the emitting side of the corresponding second slab waveguide, propagate a plurality of light signals having different wavelengths from each other, which are inputted from the corresponding optical input waveguides, so that shifts in phase are provided for respective wavelengths by the corresponding arrayed waveguide, makes the respective signal lights incident on different optical output waveguides by wavelength, and outputs lights of different wavelengths from each other from different optical output waveguides; wherein linear waveguides which are narrower than the width of the corresponding optical input waveguide are connected to the incident side of the corresponding respective optical output waveguide, a mode field reducing waveguide whose mode field of signal light is reduced toward the emitting side is connected to the incident side of the respective linear waveguides, the incident side of the corresponding respective mode field reducing waveguides are connected to the emitting side of the corresponding second slab waveguides, and the centers of the corresponding respective linear waveguides in the width direction are aligned with the centers of the incident side of the corresponding optical input waveguides, and Ws/Wb≤0.65 where Ws is the width of the corresponding respective linear waveguides and Wb is the width of the corresponding respective optical output waveguides.

An arrayed waveguide grating according to a third aspect of the invention is featured in that, in addition to the first and second aspects, the length of the corresponding linear waveguides is made 2000µm or less.

In the first aspect of the invention, the linear waveguides which are narrower than the width of the corresponding optical input waveguides are connected to the emitting side of the respective optical input waveguides, and the mode field widening waveguides in which the mode field of signal light is widened toward the emitting side are connected to the emission of the respective linear waveguides. And, the centers of the corresponding respective linear waveguides in the width direction are aligned with the centers of the incident side of the corresponding mode field widening waveguides in the width direction. Therefore, the abovementioned linear waveguides can eliminate surplus high level mode constituents of light propagated through the optical input waveguides, and cause the center of the light power to move to the center of the linear waveguides. Therefore, through actions of the corresponding respective linear waveguides, the center of light power can be made incident on the center of the mode field widening waveguide in the width direction at all times.

Also, the present inventor varied the values of Ws/Wb where Ws is the width of the corresponding respective linear waveguides and Wb is the width of the corresponding respective optical output waveguides, and checked, by experiments, whether or not the linear waveguides can fully display such functions as described above. According to the results, it was found that the abovementioned functions could be fully displayed when Ws/Wb≤0.65, and that, where Ws/Wb is larger than 0.65, the above functions could not be fully displayed even though the linear waveguides were provided.

On the basis of the results of experiments made by the inventor, the first aspect of the invention is featured in that the width of the respective linear waveguides provided between the emitting side of the respective optical input waveguides and the respective mode field widening waveguides is set to the optimal figure (Ws/Wb≤0.65). Accordingly, an arrayed waveguide grating according to the first aspect can eliminate surplus high level mode constituents of lights propagated from the optical input waveguides by using the linear waveguides, and the center of optical signal power is made incident on the center of the incident side of the corresponding mode field widening waveguides in the width direction.

And, in the arrayed waveguide grating according to the first aspect, by the abovementioned actions, uniform high level mode constituents are generated and propagated in the mode field widening waveguides, whereby the mode field pattern emitting from the mode field widening waveguides is totally made free from distortion. Therefore, a transmission spectrum of the arrayed waveguide grating according to the first aspect will have a flattened area whose flatness is satisfactory, at the long waveguide side and short wavelength side of the center wavelength.

Accordingly, in the arrayed waveguide grating according to the first aspect, even though the center wavelength of light transmission shifts due to differences caused in the production of optical input waveguides and arrayed waveguides, which form the arrayed waveguide grating, sufficient isolation can be obtained.

Also, since the arrayed waveguide grating has reciprocity, effects similar to those of the first aspect can be brought about even in the second aspect of the invention.

That is, in the second aspect, the second slab waveguides, mode field reducing waveguides, linear waveguides and optical output waveguides are connected to each other in this order. And, in the second aspect, the ratio of the width Ws of the respective linear waveguides to the width Wb of the respective optical output waveguides is made into Ws/Wb=0.65, and the figure of the Ws/Wb is made into an adequate value as in the first aspect. Therefore, in the arrayed waveguide grating according to the second aspect, when light emitting from the second slab waveguides are inputted into the linear waveguides with the mode field thereof reduced, the following actions can be brought about.

That is, in the second aspect, the respective linear waveguides shift the center of power of light signals propagated through the mode field reducing waveguides toward the center of the linear waveguides in the width direction, and make the center of the corresponding light signal power incident on the center of the abovementioned optical output waveguide in the width direction. In addition, the respective linear waveguides suppress distortion of the mode field pattern and make lights incident on the optical output waveguides. Therefore, in the second aspect, a flattened area whose flatness is satisfactory is formed at the long wavelength side and short wavelength side of the center wavelength of the transmission spectrum of the arrayed waveguide grating, whereby effects similar to those in the first aspect can be brought about.

In addition, with an arrayed waveguide grating according to the third aspect of the invention, since the length of the linear waveguides is optimized, it is possible to reduce the loss of lights transmitting or propagating through the arrayed waveguide grating in addition to the effects brought about by the first and second aspects.

### Brief Description of the Drawings

FIG. 1 is a configurational view of the major parts exemplarily showing a first preferred embodiment of an arrayed waveguide grating according to the invention,
FIG. 2 is an explanatory view showing a waveguide construction formed to determine a configuration of the abovementioned preferred embodiment, in which linear optical input waveguides are connected to tapered waveguides via linear waveguides,
FIG. 3 is a graph showing a mode field pattern obtained by a beam propagation method using the waveguide construction shown in FIG. 2,
FIG. 4(a) is a graph showing the relationship between a ratio (Ws/Wb) of the width (Ws) of linear waveguides to the width (Wb) of optical input waveguides and optical amplitude Pa/Pb, and FIG. 4(b) is a graph showing a relationship between the length of linear waveguides and excessive losses,
FIG. 5 is a graph showing an example of transmission spectra in TE and TM modes in an arrayed waveguide grating according to the abovementioned first preferred embodiment.
FIG. 6 is a configurational view exemplarily showing a state where optical input waveguides, linear waveguides, tapered waveguides and first slab waveguides are connected in a second preferred embodiment of an arrayed waveguide grating according to the invention,
FIG. 7 is a graph showing transmission spectra in TE and TM modes in the arrayed waveguide grating according to the second preferred embodiment,
FIG. 8 is an explanatory view showing a prior art arrayed waveguide grating,
FIG. 9 is a graph showing an example of transmission spectra having a flattened area in the vicinity of the transmitting center waveguide,
FIG. 10 is an explanatory view showing a waveguide construction in which tapered waveguides are provided between the emitting side of optical input waveguides and the first slab waveguides, and
FIG. 11 is a graph showing transmission spectra in TE and TM modes of an arrayed waveguide grating provided with the waveguide construction illustrated in FIG. 10.

### Best mode for carrying out the invention

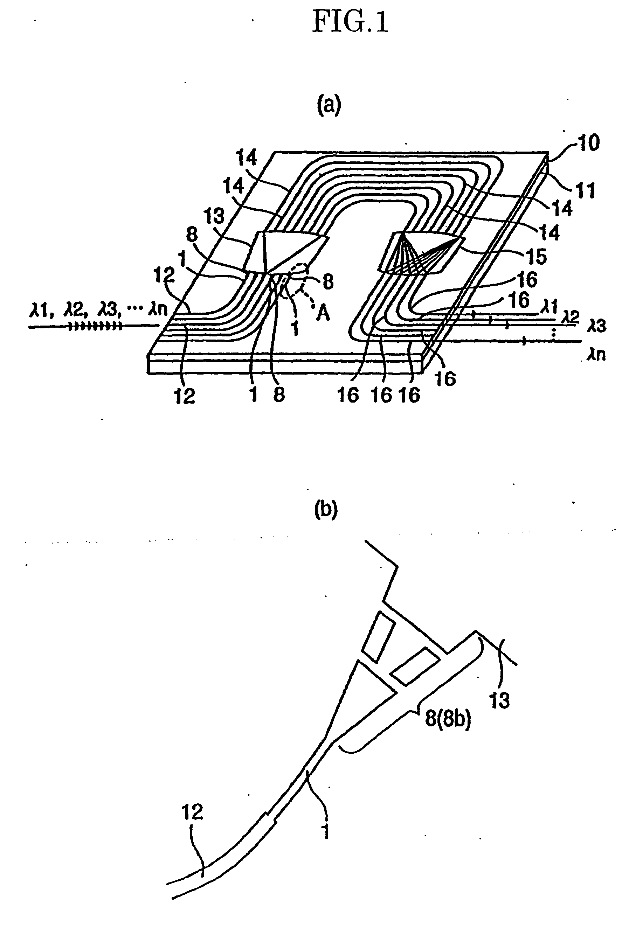

To describe the invention in further detail, a description is given of the respective preferred embodiments with reference to the accompanying drawings. Further, in the description of the preferred embodiments, parts which are identical to those in the arrayed waveguide grating illustrated in the previous description are given the same reference numbers, and overlapping description is omitted. In FIG. 1, (a) is a construction view of the major parts of the first preferred embodiment of an arrayed waveguide grating according to the invention, and (b) is an enlarged view showing the part enclosed by the broken line A in the above (a).

As shown in FIG. 1(a), the preferred embodiment is constructed almost as in a prior art arrayed waveguide grating shown in FIG. 8. A characteristic point in which the preferred embodiment is different from the prior art is, as shown in FIG. 1(b), in that linear waveguides 1 and tapered waveguides 8 intervene between the emitting side of the respective optical input waveguides 12 and the incident side of the first slab waveguides 13. The linear waveguides 1 are connected to the emitting side of the respective optical input waveguides 12. The width of the respective linear waveguides 1 is narrower than the width of the respective optical input waveguides 12, wherein the ratio Ws/Wb of the width (Ws) of the respective linear waveguides 1 to the width (Wb) of the respective optical input waveguides 12 is 0.65 or less. Tapered waveguides 8 are connected to the emitting side of the respective linear waveguides 1 as mode field widening waveguides while the emitting side of the respective tapered waveguides 8 is connected to the incident side of the first slab waveguides 13.

The center of the respective linear waveguides in the width direction is aligned with the center of the incident side of the corresponding tapered waveguides 8 in the width direction. And, the abovementioned respective linear waveguides 1 are constituted as a means for adjusting the center position of light power. That is, the respective linear waveguides 1 shift the center of power of light signals propagated through the optical input waveguides 12 connected to the respective linear waveguides 1 toward the center of the linear waveguides in the width direction and make the center of light signal power incident on the center of the incident side of the tapered waveguides 8 in the width direction. Also, in the preferred embodiment, the tapered waveguides 8 are made into slit tapered waveguides.

The respective optical input waveguides 12, arrayed waveguides 14, and optical output waveguides 16 have a film thickness of 6.5µm and a width of 6.5µm. The width of the linear waveguides is 2.5µm, and the length thereof is 1000µm. Also, the relative refractive index difference Δ between the core and the cladding in the respective waveguides 1, 12, 14 and 16 was set at 0.80%.

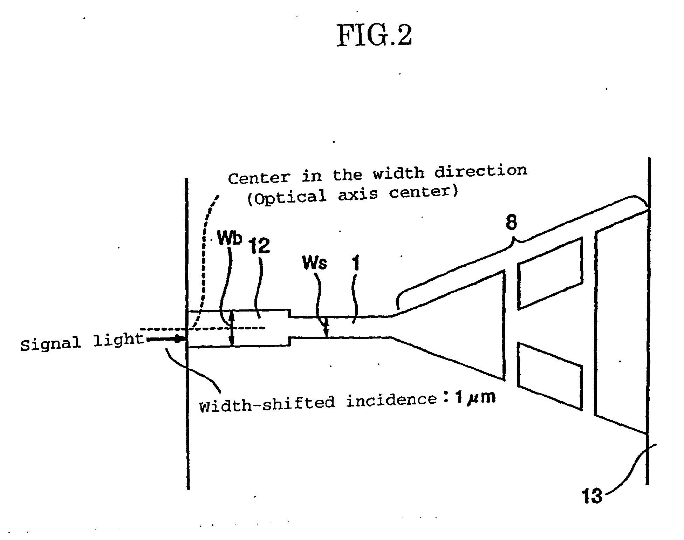

Herein, in order to determine a construction of the preferred embodiment, the present inventor formed a waveguide construction as illustrated in FIG. 2, and attempted the following calculation experiments by a beam propagation method (BPM), using the wavelength construction. The waveguide construction shown in FIG. 2 is such that the linear waveguides 1 which are narrower in width than the optical input waveguides 12 are connected to the emitting side of the linear optical input waveguides 12, tapered waveguides 8 are connected to the emitting side of the linear waveguides 1, and the incident side of the first slab waveguides 13 is connected to the emitting side of the tapered waveguides 8.

Since the optical input waveguides 12 which form a real arrayed waveguide grating present a curved construction, in almost all cases, the center of light power of the curved optical input waveguides 12 shifts from the center of the waveguides. Therefore, in order to simulate the state as an exemplary, light was made incident on the incident end of an optical fiber (not illustrated) connected to the incident end of the linear optical input waveguides 12 shown in FIG. 2 in a state where the core of the optical fiber axially shifts by 1µm. If so, the center of power of light propagating through the optical input waveguides 12 shifts by 1µm from the center (optical axis center) of the optical input waveguides 12 in the width direction as in the case where the optical input waveguides are formed curved.

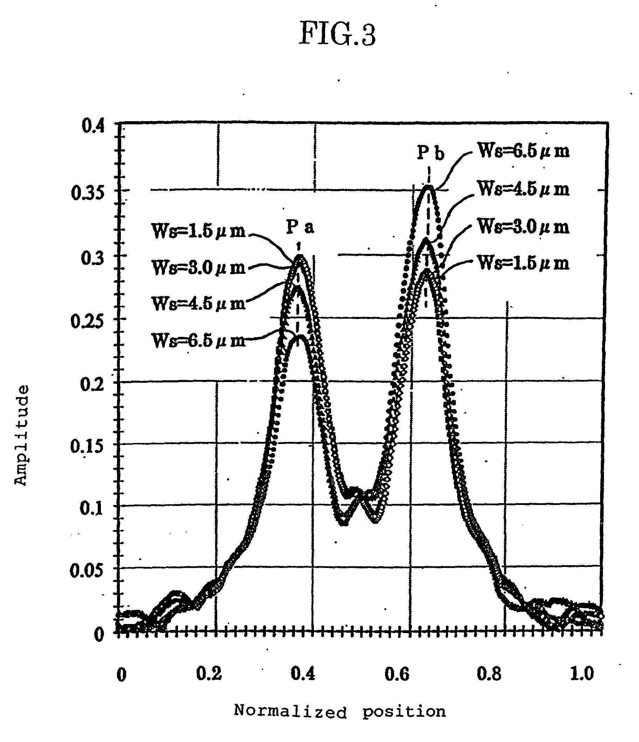

Under the above conditions, a simulation was carried out by the beam propagation method, wherein the mode field at the terminal (emission end) of the tapered waveguides 8 was calculated. And, as shown in Fig. 3, the positions of he terminal end of the tapered waveguides 8 in the width direction were normalized, whereby the amplitude of the mode field in the normalized positions was obtained.

Further, values of the parameters used in the calculation of the abovementioned mode field are as shown below; that is, with respect to signal lights inputted from the optical input waveguides 12, the wavelength is 1.55µm, relative refractive index difference Δ is 0.80%, film thickness of the optical input waveguides 12 is 6.5µm, width Wb of the optical input waveguides 12 is 6.5µm, length of the linear waveguides 1 is 500µm, widths Ws of the linear waveguides 1 are 1.5µm, 3.0µm, 4.5µm, and 6.5µm. Also, in FIG. 3, linear waveguides 1 whose width Ws is 1.5µm are indicated by the symbol ■, those whose width is Ws is 3.0µm is indicated by the symbol ◇, those whose width Ws is 4.5µm is indicated by the symbol ▲, and those whose width Ws is 6.5µm is indicated by the symbol ●.

As has been made clear in FIG. 3, as the width of the linear waveguides 1 becomes wider (that is, the width of the linear waveguides 1 is drawn nearer the width of the optical input waveguides 12), it is found that the optical amplitude profile is largely distorted at the terminal end of the tapered waveguides 8. On the contrary, as the width of the linear waveguides 1 becomes narrower, the profile is less distorted at the terminal end of the tapered waveguides 8, whereby almost no distortion is generated in the optical amplitude where the width of the linear waveguides 1 is 3µm or less.

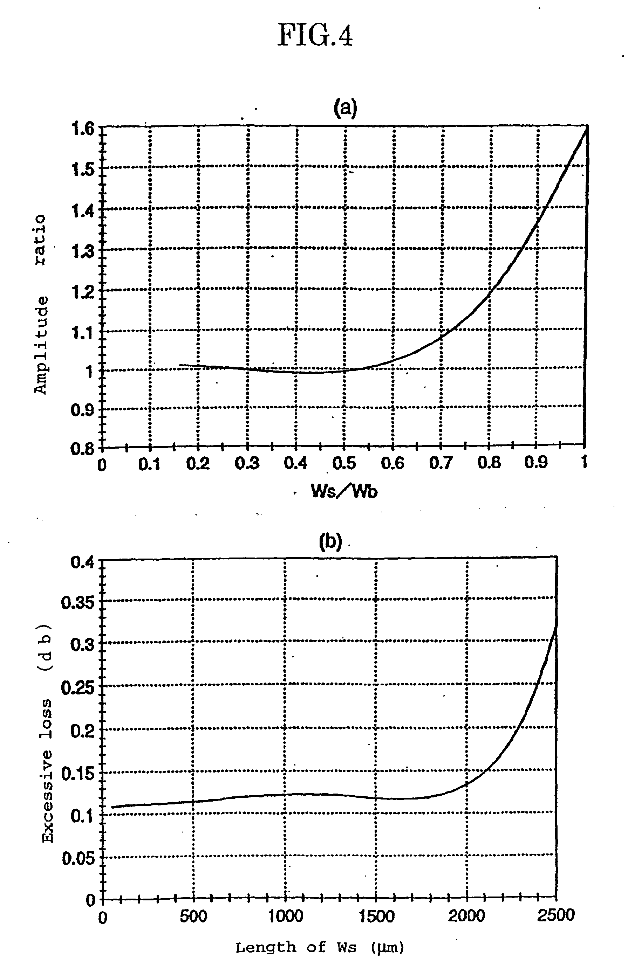

Therefore, on the basis of the results in FIG.3, the inventor attempted to obtain a relationship in the amplitude ratio (Pa/Pb) between (Pa) and optical amplitude (Pb), which forms two ridges in FIG. 3, with respect to the normalized Ws/Wb in connection with the width Ws of the linear waveguides 1 and width Wb of the optical input waveguides 12 as shown in FIG. 4(a). And, on the basis of the relationship, the inventors investigated the relationship between the width of the linear waveguides 1 and distortion of the mode field power profile at the terminal end of the tapered waveguides 8.

As a result, where Ws/Wb is 0.65 or less, the amplitude ratio (Pa/PB) becomes almost 1, wherein it is found that the light power Pa is made almost coincident with the light power Pb. Thus, the optical amplitude Pa being almost coincident with the optical amplitude Pb indicates that there is almost no distortion in the mode field profile at the terminal end of the tapered waveguides 8. That is, when the optical amplitude Pa is almost coincident with the optical amplitude Pb, a flattened area as shown in FIG. 9 will be produced at the center wavelength of transmission spectra of the arrayed waveguide diffraction grating.

Further, on the basis of the results in FIG. 3, the inventor attempted to obtain the excessive loss where the length L of the linear waveguides 1 is made into a parameter. Since the width of the linear waveguides 1 is narrower than that of the optical input waveguides 12, a light enclosure effect is weakened to some degree. Therefore, it is considered that since light radiation is produced around the linear waveguides 1, a loss is produced by the light radiation.

The abovementioned excessive loss is such that the radiation loss has been obtained by calculations based on FIG. 3. In addition, the results shown in FIG. 4(b) indicate those obtained where it is assumed that the Ws/Wb is 0.65. As has been made clear in FIG. 4, it is understood that the excessive loss is small and constant where the length of the linear waveguides is 2000µm or less.

On the basis of the results of the abovementioned calculations, in the preferred embodiment, the width of the linear waveguides 1 was made 2.5µm(the abovementioned Ws/Wb is approximately 0.385) which is narrower than the width of the optical input waveguides 12, and the length of the linear waveguides was made 1000µm. Also, as described above, the film thickness was made 6.5µm and width was made 6.5µm with respect to the respective optical input waveguides 12, arrayed waveguides 14, and optical output waveguides 16.

The preferred embodiment is constructed as described above, and the arrayed waveguide diffraction grating according to the preferred embodiment is constructed as follows; That is, first, an undercladding layer (SiO₂-B₂O₃-P₂O₅-based) and SiO₂-B₂O₉-P₂O₅-GeO₂-oriented) are formed on a silicon substrate 11 by a flame hydrolysis deposition method. Next, they are sintered at a high temperature and made transparent. After that, using a photo mask forming a waveguide construction shown in FIG. 1, the photo mask pattern is transferred on a core film by a photo lithography method and a reactive ion etching method, whereby the abovementioned waveguide construction is formed by the core. After that, cladding glass corpuscles for being filled up are embedded by the flame hydrolysis deposition method, and sintered glass is formed to obtain an arrayed waveguide diffraction grating.

Next, a description is given of actions of the arrayed waveguide diffraction grating according to the preferred embodiment. In the preferred embodiment, for example, transmitting side optical fibers are connected to the optical input waveguides 12 as in a prior art arrayed waveguide diffraction grating, so that wavelength multiplexed lights are introduced therein. However, i the preferred embodiment, lights passing through the optical input waveguides 12 are made incident on the linear waveguides 1 which eliminate surplus high level mode constituents of lights propagated through the optical input waveguides. Further, the center of light power shifts to the center of the linear waveguides 1, wherein the center of the light power is made incident on the center of the tapered waveguides 8 in the width direction.

Therefore, in the preferred embodiment, uniform high level mode constituents will be produced and caused to propagate in the tapered waveguides 8, whereby the mode field pattern is totally made into a shape free from any distortion, and light is caused to emit from the terminal end (emission end) of the tapered waveguides 8. Finally, the light is made incident on the first slab waveguides 13.

The light introduced into the first slab waveguides 13 is widened by the diffraction effect as in the prior art, and are made incident on a plurality of respective arrayed waveguides 14 and propagate through the respective arrayed waveguides 14. Accordingly, the light propagated through the arrayed waveguides 14 further propagates to the second slab waveguides 15 and optical output waveguides 16, and are emitted from the optical output waveguides 16. However, in the preferred embodiment, as described above, the light emitting from the terminal end (emission end) of the tapered waveguides 8 is made incident on the first slab waveguides 13 after the mode field pattern of the light is made into a shape totally free from distortion. Therefore, in the preferred embodiment, transmission spectra emitting from the respective optical output waveguides 16 constitute light having a flattened area whose flatness is satisfactory as designed, as shown in FIG. 9.

And, by connecting optical fibers for optical output to, for example, the emission end of respective optical output waveguides 16, light of respective wavelengths having a flattened area as shown in FIG. 9 can be picked up.

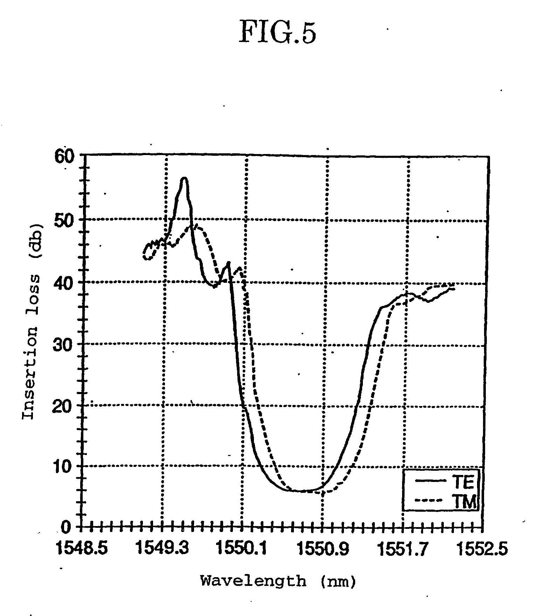

FIG. 5 shows one example of the results of having measured the transmission spectra of an arrayed waveguide grating according to the preferred embodiment. As shown in the same drawing, either of the transmission spectra outputted from the respective optical output waveguides becomes an ideal spectral shape almost free from distortion in the total shape, and it is confirmed that there is no problem with respect to excessive loss.

The preferred embodiment is such that linear waveguides 1 which are narrower than the width of the optical input waveguides 12 are provided at the emitting side of the optical input waveguides 12, and the width of the linear waveguides 1 is made into an adequate figure. Therefore, the preferred embodiment can eliminate surplus high level mode constituents of light propagated from the optical input waveguides, and can shift the center of light power to the center of the linear waveguides in the width direction. And, by the actions of the linear waveguides, the center of light signal power can be made incident on the center of the tapered waveguides in the width direction. For this reason, with the preferred embodiment, it is possible to produce and propagate uniform high level mode constituents in the tapered waveguides 8, and can make the mode field pattern emitting from the tapered waveguides 8 totally free from distortion.

Therefore, an arrayed waveguide grating according to the preferred embodiment can form a flattened area whose flatness is satisfactory as designed, at the long wavelength side and short wavelength side of the center wavelength of the transmission spectra. Accordingly, even though the center wavelength of light transmission shifts due to a difference in the production process of, for example, optical input waveguides 12 and arrayed waveguides 14, etc., which form an arrayed waveguide grating, sufficient isolation can be obtained, whereby arrayed waveguide gratings can be produced at a high yield.

In addition, according to the preferred embodiment, since the length of linear waveguides 1 is made 1000µm which is less than 2000µm on the basis of the examination made by the inventor, it becomes possible to reduce the abovementioned excessive loss, whereby the loss of light transmitting through the arrayed waveguide grating can be reduced to a low level.

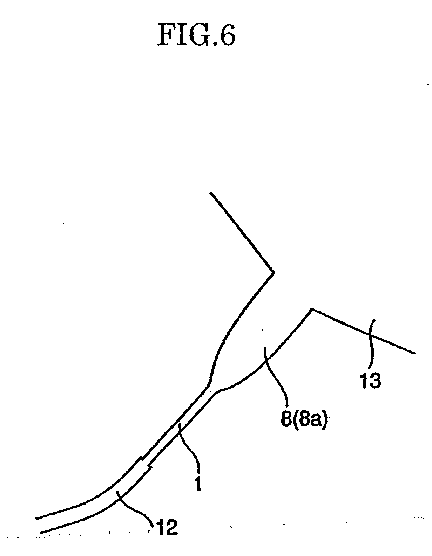

Next, a description is given of a second preferred embodiment of an arrayed waveguide grating according to the invention. The arrayed waveguide grating according to the second embodiment is constructed almost the same as that of the first preferred embodiment. A characteristic aspect of the second embodiment that is different from the first preferred embodiment is that the tapered waveguides 8 are made into parabolic tapered waveguides. That is, in the second preferred embodiment, an enlarged view shown by the broken line A in FIG. 1(a) is as shown in FIG. 6. Also, in the preferred embodiment, the width of the linear waveguides 1 is 3.0µm, and the length of the linear waveguide 1 is 500µm.

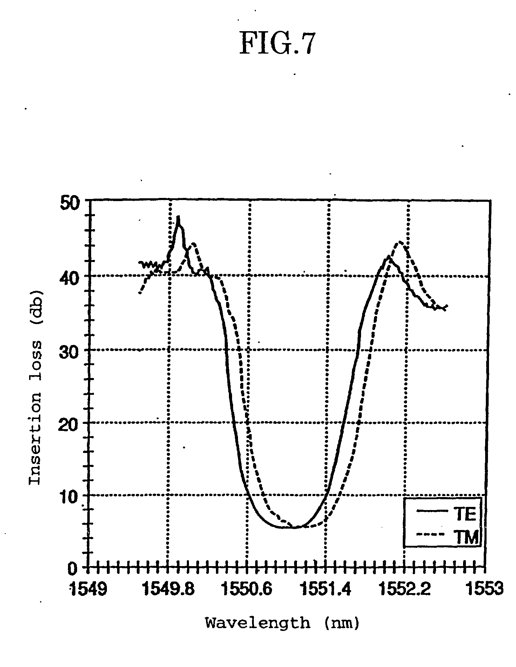

The second preferred embodiment is produced as in the first embodiment, and brings about similar actions. And, in the arrayed waveguide grating according to the second preferred embodiment, a transmission spectral pattern of light outputted from the respective optical output waveguides 16 is shaped as shown in FIG. 7. The second embodiment enables effects similar to those in the first embodiment.

In addition, the invention is not limited to the abovementioned embodiments, but may be subjected to various modified embodiments. For example, in each of the abovementioned embodiments, although the mode field widening waveguides are formed of tapered waveguides 8, the mode field widening waveguides are not necessarily the tapered waveguides 8. The mode field widening waveguides may be formed of waveguides provided with a boundary functioning to enclose light at both end sides in its width direction and having a square shape like, for example, multi-mode interface waveguides (MMI). That is, the mode field widening waveguides may be of any type having a function to widen the mode field of signal lights toward the emitting side.

Also, in the respective embodiments, although the linear waveguides 1 are provided at the emitting side of the optical input waveguides 12, they may be constructed as described below. That is, linear waveguides 1 whose width is narrower than the width of the optical input waveguides 16 are connected to the incident side of the respective optical input waveguides 16. And, mode field reducing waveguides which reduce the mode field of signal light toward the emitting side are connected to the incident side of the respective linear waveguides, and the incident side of the corresponding respective mode field reducing waveguides is connected to the emitting side of the second slab waveguides 15.

In this case, by the construction described below, it is possible to bring about effects similar to those of the respective embodiments by reciprocity of an arrayed waveguide grating. That is, the center of the respective linear waveguides in the width direction is aligned with the center of the incident end of the abovementioned optical output waveguide 16 in the width direction. And, the abovementioned respective linear waveguides 1 are caused to function as a means for adjusting the center position of light power. That is, the center of power of light signals propagated through the mode field reducing waveguides connected to the respective linear waveguides 1 is caused to shift to the center of the linear waveguides 1 in the width direction while the center of the corresponding light signal power is made incident on the center of the abovementioned optical output waveguides in the width direction by the linear waveguides 1. Further, the mode field diameter reducing waveguides can be formed by changing the connecting structure of the tapered waveguides 8 applied as the mode field diameter widening waveguides. That is, the mode field diameter reducing waveguides can be formed by connecting the wider side of the tapered waveguides 8 to the emitting side of the second slab waveguides 15 and connecting the narrower side thereof to the incident side of the linear waveguides 1 connected to the optical output waveguides 16. Still further, the mode field diameter reducing waveguides can also be formed by multi-mode interface waveguides.

Furthermore, although the width of the linear waveguides 1 was 2.5µm in the first preferred embodiment, and the width of the same was 3.0µm in the second preferred embodiment, the width of the linear waveguides 1 is not specially limited. The width may be adequately established. The width of the linear waveguides may be made into Ws/Wb≤0.65 where Ws is the width of the linear waveguides and the width of the optical input waveguides 12 and optical output waveguides 16 is Wb.

In addition, although the length of the linear waveguides is 1000µm in the first embodiment, and that of the linear waveguides is 500µm in the second embodiment, the length of the linear waveguides is not specially limited. It may be adequately determined. For example, the length of the linear waveguides may be set from 50µm to 2000µm where the ratio of the width Ws of the linear waveguide to the width Wb of the optical input waveguides 12 is Ws/Wb=0.65. If the relationship between the width of the linear waveguides 1 and length thereof is thus established, it is possible to suppress the abovementioned excessive loss, and the loss of light transmitted (propagated) through the arrayed waveguide grating can be reduced to a low level. Industrial Applicability

As described above, an arrayed waveguide grating according to the invention can form a flattened area whose flatness is satisfactory, at the long wavelength side and short wavelength side of the center wavelength of transmission spectra. Therefore, with the present invention, even though the center wavelength of light transmission shifts due to a difference in the production process of optical input waveguides and arrayed waveguides which form an arrayed waveguide grating, sufficient isolation can be secured, and higher yield production can be carried out. Therefore, the present invention is suitable for light transmission elements used for wavelength multiplexed transmissions.

## Claims

1. An arrayed waveguide grating having a waveguide construction in which
a first slab waveguide is connected to the emitting side of one or more juxtaposed optical input waveguides,
a plurality of juxtaposed arrayed waveguides of different lengths from each other, which propagate light introduced from said first slab waveguides are connected to the emitting side of said first slab waveguides,
a second slab waveguide is connected to the emitting side of said plurality of arrayed waveguides, and
a plurality of juxtaposed optical output waveguides are connected to the emitting side of said second slab waveguide, propagate a plurality of light signals having different wavelengths from each other, which are inputted from said optical input waveguides, so that shifts in phase are provided for respective wavelengths by said arrayed waveguide, makes the respective signal light incident on different optical output waveguides by wavelength, and outputs light of different wavelengths from each other from different optical output waveguides;
wherein linear waveguides whose width is narrower than the width of said optical input waveguides, are connected to the emitting side of said respective optical input waveguides, also, a mode field widening waveguide which widens a mode field of signal light toward the emitting side of the respective linear waveguides is connected to the emitting side thereof, the emitting side of said respective mode field widening waveguides is connected to the incident side of said first slab waveguide, the centers of said respective linear waveguides in the width direction thereof are aligned with the centers of the incident end of said mode field widening waveguide corresponding thereto in the width direction, and Ws/Wb≤0.65 is established where Ws is a width of said respective linear waveguides, and Wb is a width of said respective optical input waveguides.

2. An arrayed waveguide grating having a waveguide construction in which
a first slab waveguide is connected to the emitting side of one or more juxtaposed optical input waveguides,
a plurality of juxtaposed arrayed waveguides of different lengths, which propagate light introduced from said first slab waveguides are connected to the emitting side of said first slab waveguides,
a second slab waveguide is connected to the emitting side of said plurality of arrayed waveguides, and
a plurality of juxtaposed optical output waveguides are connected to the emitting side of said second slab waveguide, propagate a plurality of light signals having different wavelengths from each other, which are inputted from said optical input waveguides, so that shifts in phase are provided for respective wavelengths by said arrayed waveguide, makes the respective signal lights incident on different optical output waveguides according to wavelength, and outputs lights of different wavelengths from different optical output waveguides;
wherein linear waveguides which are narrower than the width of said optical input waveguide are connected to the incident side of said respective optical output waveguide, a mode field reducing waveguide whose mode field of signal lights is reduced toward the emitting side is connected to the incident side of the respective linear waveguides, the inciden side of said respective mode field reducing waveguides are connected to the emitting side of said second slab waveguides, and the centers of said respective linear waveguides in the width direction are aligned with the centers of the incident side of said optical input waveguides, and Ws/Wb≤0.65 where Ws is the width of said respective linear waveguides and Wb is the width of said respective optical output waveguides.

3. An arrayed waveguide diffraction grating as set forth in Claim 1 or 2, wherein the length of said linear waveguides is made into 2000µm or less.
